(19) Europäisches Patentamt
European Patent Office
Office européen des brevets

(11) **EP 2 089 262 B1**

(12) **EUROPÄISCHE PATENTSCHRIFT**

(45) Veröffentlichungstag und Bekanntmachung des Hinweises auf die Patenterteilung:
**01.09.2010 Patentblatt 2010/35**

(21) Anmeldenummer: **07846597.8**

(22) Anmeldetag: **15.11.2007**

(51) Int Cl.:
***B60W 30/16*** *(2006.01)*      ***B60K 31/00*** *(2006.01)*

(86) Internationale Anmeldenummer:
**PCT/EP2007/009873**

(87) Internationale Veröffentlichungsnummer:
**WO 2008/064774 (05.06.2008 Gazette 2008/23)**

(54) **VERFAHREN ZUR GESCHWINDIGKEITS- UND/ODER ABSTANDSREGELUNG BEI KRAFTFAHRZEUGEN**

METHOD FOR REGULATING SPEED AND/OR FOLLOWING DISTANCE FOR AUTOMOBILES

PROCÉDÉ DE RÉGULATION DE LA VITESSE ET/OU DE RÉGULATION DE LA DISTANCE ENTRE LES VÉHICULES POUR VÉHICULES AUTOMOBILES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **30.11.2006 DE 102006056629**

(43) Veröffentlichungstag der Anmeldung:
**19.08.2009 Patentblatt 2009/34**

(73) Patentinhaber: **Bayerische Motoren Werke Aktiengesellschaft 80809 München (DE)**

(72) Erfinder:
• **LAIOU, Maria-Christina 80796 München (DE)**
• **MESKE, Alexander 81667 München (DE)**
• **LANGER, Falk 09496 Marienberg (DE)**

(56) Entgegenhaltungen:
**EP-A- 0 798 150      DE-A1- 10 018 557
DE-A1- 10 045 611      DE-A1-102004 047 177
GB-A- 2 309 555**

**Beschreibung**

Die Erfindung bezieht sich auf ein Verfahren zur Geschwindigkeits- und/oder Abstandsregelung bei Kraftfahrzeugen mit abstandsbezogenen Längsregelsystemen nach dem Oberbegriff des Patentanspruchs 1.

Kraftfahrzeuge mit Längsregelsystemen sind seit langem bekannt. Die meisten derzeit erhältlichen Längsregelsysteme regeln die Geschwindigkeit des Kraftfahrzeugs durch Vorgabe eines Beschleunigungswertes auf eine vorgegebene Wunsch- bzw. Soll-Geschwindigkeit. Neben diesen Längsregelsystemen können heute bereits bei einigen Herstellern auch um eine Abstandsregelung erweiterte Längsregelsysteme, sog. abstandsbezogene Längsregelsysteme erworben werden. Derartige, bspw. bei der Anmelderin der vorliegenden Patentanmeldung unter der Bezeichnung "Active Cruise Control" angebotene Systeme ermöglichen es, das Kraftfahrzeug unter Einhaltung eines gewünschten Abstands zu einem vorausfahrendem Fahrzeug mit einer gewünschten oder einer entsprechend geringeren Geschwindigkeit automatisch zu führen. Vom Prinzip her ist dabei die allgemein bekannte Längsregelung bzw. Fahrgeschwindigkeitsregelung, die eine bestimmte vorgegebene Geschwindigkeit einhält, um eine zusätzliche Abstandsfunktion erweitert, so dass der Einsatz einer solchen "aktiven" Fahrgeschwindigkeitsregelung auch im dichten Autobahn- und Landstrassenverkehr möglich wird.

Diese sog. "aktive Fahrgeschwindigkeitsregelung" hält durch Vorgabe eines Freifahrt-Beschleunigungswertes die vorgegebene Wunsch- bzw. Soll-Geschwindigkeit, wenn die eigene Fahrspur frei ist. Erkennt eine am Kraftfahrzeug angebrachte Abstandssensorik, die insbesondere auf Radarbasis arbeiten kann, ein vorausfahrendes Zielobjekt bzw. (Kraft-)Fahrzeug in der eigenen Spur, so wird die eigene Geschwindigkeit, bspw. durch Veranlassen eines geeigneten Folgefahrt-Beschleunigungswertes an die Geschwindigkeit des vorausfahrenden Kraftfahrzeugs bzw. Zielobjekts derart angepasst, dass eine in der "aktiven Fahrgeschwindigkeitsreglung" bzw. im entsprechenden Längsregelsystem enthaltene Abstandsregelung automatisch einen vorgegebenen situationsgerechten Abstand zum vorausfahrenden Kraftfahrzeug bzw. Zielobjekt einhält. Derartige abstandsgeregelte Längsregelsysteme sind in der Regel nur bis zu einer minimalen Geschwindigkeit von bspw. 30km/h aktiv oder aktivierbar, können aber um eine sog. Stop-and-Go-Funktion erweitert werden, so dass eine abstandsbezogene Längsregelung bis und aus dem Stillstand möglich ist.

Wird während der Regelung auf einen vorgegebenen Abstand zu einem vorausfahrendem Zielobjekt bei höheren Geschwindigkeiten ein Zielobjektverlust detektiert, sind die abstandsbezogenen Längsregelsysteme in der Regel derart ausgebildet, dass das Längsregelsystem sofort von der Folgeregelung in die Freifahrtregelung, d. h. in die Regelung zum Erreichen der vorgegebenen Geschwindigkeit umschalten. Problematisch ist dies allerdings, wenn der detektierte Zielobjektverlust nur vorübergehend ist, da das vorausfahrende Zielobjekt eine Kurve befährt, oder der Zielobjektverlust aufgrund eines Sensorfehlers detektiert wird.

Die DE 100 47 746 A1 offenbart ein Verfahren zur abstandsbezogenen Längsregelung, bei dem nach einem Zielobjektverlust mittels der Informationen eines Navigationssystems die Wahrscheinlichkeit ermittelt wird, mit der das vorausfahrende Fahrzeug bzw. Zielobjekt und/oder das eigene Kraftfahrzeug eine Kurve befährt. Überschreitet die ermittelte Wahrscheinlichkeit eine vorgegebene Schwelle, wird eine zeitlich verzögerte Freifahrt-Beschleunigung auf die vorgegebene Geschwindigkeit vorgenommen.

Die DE 100 06 403 A1 offenbart ein Verfahren zu Geschwindigkeits- und Abstandsregelung, bei dem bei einem Zielobjektverlust ein Übergangsbeschleunigungswert in Abhängigkeit von der Geschwindigkeit des Zielobjekts vor dem Verlust, der Fahrgeschwindigkeit des Kraftfahrzeugs und dem Abstand zum ursprünglichen Zielobjekt solange berechnet wird, bis ein neues Zielobjekt erfasst wird oder das Kraftfahrzeug den Ort des Zielobjektverlustes erreicht hat. Ab diesem Zeitpunkt startet entweder die herkömmliche Folgeregelung auf das neue Zielobjekt oder eine Freifahrtregelung.

Bisher gibt es allerdings auf dem Markt noch keine abstandsbezogenen Regelsystemen, die bei detektierten Zielobjektverlusten bei niedrigen Geschwindigkeiten (Stop-and-Go) und den daraus resultierenden sehr kleinen Abständen zu den ursprünglichen Zielobjekten ein beherrschbares Fahrzeugverhalten darstellen können. Um dieses Problem zu lösen, wird bei Zielobjektverlusten während sehr geringer Geschwindigkeiten, bspw. unter 30km/h das gesamte abstandsbezogene Längsregelsystem abgeschaltet. Dies führt für den Fahrer zu erheblichen Komforteinbußen.

Aufgabe der Erfindung ist es, ein verbessertes Verfahren zur Geschwindigkeits- und Abstandsregelung im Hinblick auf einen detektierten Zielobjektverlust anzugeben, welches vor allem für den Einsatz im Stop-and-Go-Betrieb geeignet ist.

Diese Aufgabe wird durch ein Verfahren nach Patentanspruch 1 gelöst. Vorteilhafte Weiterbildungen ergeben sich aus den abhängigen Ansprüchen.

Die Erfindung geht davon aus, dass das abstandsbezogene Längsregelsystem bei Freifahrt, d. h. bei einer Fahrt, bei der kein Zielobjekt detektiert wird, einen Freifahrt-Beschleunigungswert zum Erreichen bzw. Halten einer vorgegebenen Geschwindigkeit vorgibt. Befindet sich ein als Zielobjekt detektiertes vorausfahrendes Fahrzeug vor dem Kraftfahrzeug, d. h. das Kraftfahrzeug befindet sich in einer Folgefahrt-Situation, dann wird ein Folgefahrt-Beschleunigungswert zum Erreichen bzw. Halten eine vorgegebenen Abstands zu dem Zielobjekt vorgegeben. Unter dem Begriff Beschleunigungswert können jeweils positive oder negative Beschleunigungen verstanden werden.

Wird nun während der Folgefahrt ein Verlust des Zielobjekts detektiert, wird ein Übergangs-Beschleunigungswert vorgegeben. Die Erfindung zeichnet sich dadurch aus, dass der Übergangs-Bescheunigungswert für die Dauer eines zum Zeitpunkt des Zielobjektverlustes geschwindigkeitsabhängigen Zeitintervalls ermittelt wird. Dabei ist das Zeitintervall innerhalb gewisser Grenzen umso länger, je geringer die Geschwindigkeit zum Zeitpunkt des Zielobjektverlustes ist. Wird innerhalb des geschwindigkeitsabhängigen Zeitintervalls wieder ein Zielobjekt detektiert, wird sofort wieder der ermittelte Folgefahrt-Beschleunigungswert vorgegeben. Entsprechend wird nach dem Ende des Zeitintervalls - sofern kein Zielobjekt detektiert wird - in bekannter Weise der Freifahrt-Beschleunigungswert vorgegeben.

Befindet sich das Kraftfahrzeug während des Stop-and-Go-Betriebs in einer Folgeregelungs-Betriebsart, ist der Abstand zum vorausfahrenden Fahrzeug in der Regel sehr gering. Wird nun ein Zielobjektverlust bspw. aufgrund eines Sensorfehlers detektiert, obwohl das Zielobjekt immer noch da ist, würde eine sofortige Beschleunigung des Kraftfahrzeugs mit einem Freifahrt-Beschleunigungswert zu einem sehr raschen Auffahren auf das vorausfahrende Fahrzeug, schlimmstenfalls sogar zu einer Kollision mit dem vorausfahrenden Zielobjekt führen. Die Erfindung bietet den Vorteil, dass gerade bei geringen Geschwindigkeiten für eine längere Zeit ein Übergangs-Beschleunigungswert ermittelt und vorgegeben werden kann. Somit ist der Einsatz des Verfahrens vor allem bei niedrigen Geschwindigkeiten, wie sie im Stop-and-Go-Verkehr auftreten, vorteilhaft.

Vorteilhafterweise wird der Übergangs-Beschleunigungswert innerhalb des Zeitintervalls in Abhängigkeit von der Zeit(-dauer) nach dem Zielobjektverlust und der Differenz aus dem Freifahrt-Beschleunigungswert und einem Start-Beschleunigungswert ermittelt und vorgegeben. Der Freifahrt-Beschleunigungswert ist derjenige Beschleunigungswert, der ermittelt bzw. vorgegeben werden würde, wenn z. B. die Wunschgeschwindigkeit erhöht worden wäre oder wenn das abstandsbezogene Längsregelsystem zu diesem Zeitpunkt und bei dieser Geschwindigkeit erst aktiviert worden wäre. Der Start-Beschleunigungswert kann der Folgefahrt-Beschleunigungswert, der zuletzt ermittelt wurde, oder ein zwischen dem Folge-Beschleunigungswert und dem Freifahrt-Beschleunigungswert liegender Zwischen-Beschleunigungswert sein, der abhängig von der Fahrzeuggeschwindigkeit zum Zeitpunkt des Zielobjektverlustes sein kann.

In einer vorteilhaften Ausgestaltung der Erfindung wird der Übergangs-Beschleunigungswert in Abhängigkeit von der Zeit(-dauer) nach dem Zielobjektverlust derart ermittelt bzw. vorgegeben, dass sich der Übergangs-Beschleunigungswert innerhalb des geschwindigkeitsabhängigen Zeitintervalls gemäß einer Rampe von einem Start-Beschleunigungswert kontinuierlich bis zum Freifahrt-Beschleunigungswert verändert. Der Übergangs-Beschleunigungswert steigt dann über die Zeit kontinuierlich vom Start-Beschleunigungswert bis zum Freifahrt-Beschleunigungswert am Ende des geschwindigkeitsabhängigen Zeitintervalls.

In einer alternativen Ausgestaltung der Erfindung kann der Übergangs-Beschleunigungswert in Abhängigkeit von der Zeit(-dauer) nach dem Zielobjektverlust auch derart ermittelt werden, dass für eine vorgegebene Zeit nach dem Zielobjektverlust ein Start-Beschleunigungswert vorgegeben wird und anschließend der Übergangsbeschleunigungswert innerhalb des Zeitintervalls nach der Vorgabe des Start-Beschleunigungswertes bis zum Ende des Zeitintervalls gemäß einer Rampe vom Start-Bescheunigungswert kontinuierlich bis zum Freifahrt-Beschleunigungswert verändert wird. Diese Ausgestaltung unterscheidet sich von der vorherigen lediglich dadurch, dass der Übergangs-Beschleunigungswert für eine vorgegebene Zeit dem Start-Beschleunigungswert entspricht, und erst anschließend die Anpassung vom Start-Beschleunigungswert zum Freifahrt-Beschleunigungswert erfolgt.

Vorteilhafterweise kann auch in Abhängigkeit von der Zeit(-dauer) nach dem Zielobjektverlust und der aktuellen Geschwindigkeit eine Zielobjektverlust-Wahrscheinlichkeit ermittelt werden, die mit größer werdendem Zeitabstand zwischen dem Zeitpunkt des Zielobjektverlustes und der aktuellen Zeit nach dem Zielobjektverlust größer wird, wenn kein Zielobjekt vorhanden ist. Die Zielobjektverlust-Wahrscheinlichkeit ist dabei ein Maß für die Wahrscheinlichkeit, mit der das Zielobjekt tatsächlich nicht mehr vorhanden ist, da es bspw. abgebogen ist oder die Spur gewechselt hat. Es kann auch eine Wahrscheinlichkeit ermittelt werden, die ein Maß dafür ist, mit welcher Wahrscheinlichkeit trotz detektiertem Zielobjektverlust noch ein Zielobjekt vorhanden ist. Diese Wahrscheinlichkeit wäre somit der Kehrwert der Zielobjektverlust-Wahrscheinlichkeit.

Der Übergangs-Beschleunigungssollwert kann dann unter Berücksichtigung der ermittelten Zielobjektverlust-Wahrscheinlichkeit durch Multiplikation der

Wahrscheinlichkeit mit der Differenz aus einem Startbeschleunigungswert und dem Freifahrt-Beschleunigungswert und anschließender Addition mit dem Startbeschleunigungswert gebildet werden. Somit wird ein im Hinblick auf eine mögliche Fehlmessung optimaler Übergangs-Beschleunigungswert vorgegeben.

Die Erfindung wird nun anhand eines Ausführungsbeispiels näher erläutert. Dabei zeigt

Fig. 1  eine über die Zeit aufgetragene und ermittelte Zielobjektverlust- Wahrscheinlichkeit innerhalb eines geschwindigkeitsabhängigen Zeit- intervalls und

Fig. 2  einen in Abhängigkeit der Zielobjektverlust-Wahrscheinlichkeit vorge- gebenen Übergangs-Beschleunigungswert innerhalb des geschwin- digkeitsabhängigen Zeitintervalls.

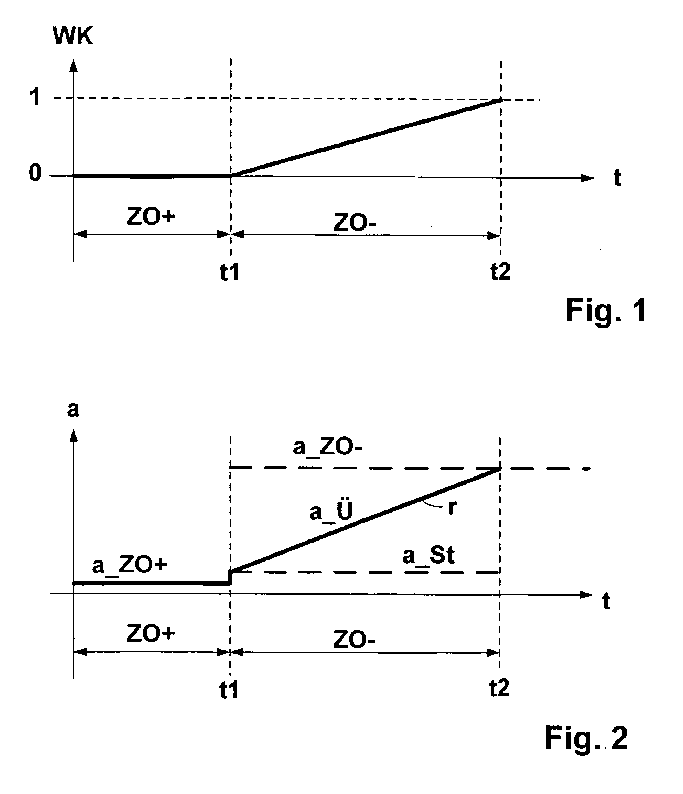

Die Fig. 1 zeigt ein Diagramm, bei dem die ermittelte Zielobjektverlust-Wahrscheinlichkeit WK über die Zeit t aufgetragen ist. Die Zielobjektverlust-Wahrscheinlichkeit WK gibt an, mit welcher Wahrscheinlichkeit sich tatsächlich kein Zielobjekt mehr vor dem Kraftfahrzeug befindet.

Von Beginn der Zeitdarstellung t bis zum Zeitpunkt t1 wird mittels geeigneter Sensoren ein Zielobjekt detektiert - hier mit ZO+ gekennzeichnet. Innerhalb dieses Zeitbereichs ist die Zielobjektverlust-Wahrscheinlichkeit WK 0, da kein Zielobjektverlust detektiert wird. Solange das Zielobjekt detektiert wird, wird keine Zielobjektverlust-Wahrscheinlichkeit WK ermittelt.

Zum Zeitpunkt t1 wird dann der Verlust des Zielobjekts detektiert - hier mit ZO- gekennzeichnet. In Abhängigkeit von der aktuellen Geschwindigkeit des Kraftfahrzeugs zum Zeitpunkt des Zielobjektverlustes t1 wird nun ein Zeitintervall von t1 bis t2 vorgegeben, innerhalb dessen die Zielobjektverlust-Wahrscheinlichkeit WK ermittelt wird. Gleich zu Beginn des detektierten Zielobjektverlustes ZO-, also kurz nach dem Zeitpunkt t1 wird davon ausgegangen, dass der Verlust nur auf einer Fehlinformation, bspw. einem fehlerhaften Sensorsignal beruht. Somit ist die Zielobjektverlust-Wahrscheinlichkeit WK Null 0 bzw. nahezu Null 0. Mit steigender Zeit t von Beginn des detektierten Zielobjektverlustes ZO- steigt auch die Wahrscheinlichkeit WK, dass es sich tatsächlich um einen Zielobjektverlust ZO- handelt. Wird bis zum geschwindigkeitsabhängigen Zeitpunkt t2 kein Zielobjekt (erneut) detektiert, steigt die Zielobjektverlust-Wahrscheinlichkeit WK kontinuierlich, bis sie zum Zeitpunkt t2 den Wert 1 annimmt. Die Zielobjektverlust-Wahrscheinlichkeit WK steigt in Abhängigkeit von der Zeit t ab dem Zeitpunkt des Zielobjektverlustes t1 somit gemäß einer Rampe von Null 0 bis Eins 1 an. Die Steigung der Rampe ergibt sich aus der Geschwindigkeit des Kraftfahrzeugs zum Zeitpunkt des Zielobjektverlustes t1 da diese Grundlage für die Länge des Zeitintervalls von t1 bis t2 ist.

In der Fig. 2 ist die Beschleunigung a des Kraftfahrzeugs für die verschiedenen Betriebsarten des abstandsbezogenen Längsregelsystems dargestellt, wobei zur Vereinfachung alle Beschleunigungswerte als konstant angenommen werden. Solange sich das Kraftfahrzeug in einer Folgefahrt befindet, also ein Zielobjekt detektiert wird, wird zur Längsregelung ein Folgefahrt-Beschleunigungswert a_ZO+ zum Erreichen bzw. Einhalten eines vorgegebenen Abstands auf ein vorausfahrendes Fahrzeug vorgeben. Wird nun zum Zeitpunkt t1 ein Zielobjektverlust detektiert, wird die Regelung auf den vorgegebenen Abstand abgebrochen. Das abstandsbezogene Längsregelsystem ermittelt nun einen Freifahrt-Beschleunigungswert a_ZO-, der zum Erreichen der vorgegebenen Geschwindigkeit vorgegeben werden würde, falls das abstandsbezogene Längsregelsystem erst zum Zeitpunkt t1 aktiviert worden wäre und sich keine Zielobjekt vor dem Kraftfahrzeug befinden würde. Weiter wird ein Start-Beschleunigungswert a_St ermittelt bzw. vorgegeben, der von verschiedenen Parametern oder Betriebsbedingungen des Kraftfahrzeugs, vorzugsweise von der Geschwindigkeit des Kraftfahrzeugs zum Zeitpunkt des Zielobjektverlusts, abhängig sein kann. Der Start-Beschleunigungswert kann bspw. in einem Kennfeld hinterlegt sein.

Das abstandsbezogene Längsregelsystem ermittelt nun innerhalb des geschwindigkeitsabhängigen Zeitintervalls von t1 bis t2 einen Übergangs-Beschleunigungswert a_Ü, der für die Längsregelung innerhalb dieses Zeitintervalls von t1 bis t2 vorgegeben wird. Der Übergangs-Beschleunigungswert a_Ü wird innerhalb des Zeitintervalls von t1 bis t2 in Abhängigkeit von der ermittelten Zielobjektverlust-Wahrscheinlichkeit WK aus Fig. 1 ermittelt. Der Zusammenhang zwischen dem Übergangs-Beschleunigungswert a_Ü und der Zielobjektverlust-Wahrscheinlichkeit WK kann durch folgende Gleichung beschrieben werden:

$$a\_\ddot{U} = a\_St + WK * (a\_ZO\text{-} - a\_St)$$

Wie bereits oben erwähnt handelt es sich bei a_ZO- um einen Freifahrt-Beschleunigungswert, der für die Regelung vorgegeben werden würde, falls das abstandsbezogene Längsregelsystem zum Zeitpunkt t1 und bei der gleichen Geschwindigkeit aktiviert worden wäre. Bei a_St handelt es sich um den Start-Beschleunigungswert der als Wert entweder den Folgebeschleunigungswert a_ZO+ oder einem Wert zwischen dem Folgefahrt-Beschleunigungswert a_ZO+ und dem Freifahrt-Beschleunigungswert a_ZO-annehmen kann.

Somit ergibt sich innerhalb des geschwindigkeitsabhängigen Zeitintervalls von t1 bis t2 ein derartiger Übergangs-Beschleunigungswert a_Ü, dass der Wert kontinuierlich vom Start-Beschleunigungswert a_St bis zum Erreichen des Freifahrt-Beschleunigungswertes a_ZO- zum Zeitpunkt t2 steigt. Sobald der Zeitpunkt t2 erreicht wird, wird eine herkömmliche Längsregelung unter Vorgabe des Freifahrt-Beschleunigungswertes a_ZO-vorgenommen, bis erneut ein Zielobjekt detektiert wird.

Alternativ kann auch für eine vorgegebene Zeit der Übergangs-Beschleunigungswert dem Start-Beschleunigungswert entsprechen und erst anschließend der kontinuierliche Übergang vom Start-Beschleunigungswert zum Freifahrt-Beschleunigungswert erfolgen.

## Patentansprüche

1. Verfahren zur Geschwindigkeits- und/oder Abstandsregelung bei Kraftfahrzeugen mit abstandsbezogenen Längsregelsystemen, wobei bei Freifahrt (ZO-) ein Freifahrt-Beschleunigungswert (a_ZO-) zum Erreichen einer vorgegebenen Geschwindigkeit, und bei einer Folgefahrt (ZO+) auf ein detektiertes Zielobjekt ein Folgefahrt-Beschleunigungswert (a_ZO+) zum Einhalten eines vorgegebenen Abstands zu dem Zielobjekt vorgegeben wird, und wobei bei einem Verlust des Zielobjekts während einer Folgefahrt (ZO-) ein Übergangs-Beschleunigungswert (a_Ü) vorgegeben wird, **dadurch gekennzeichnet, dass** der Übergangs-Beschleunigungswert (a_Ü) für die Dauer eines zum Zeitpunkt des Zielobjektverlustes (t1) geschwindigkeitsabhängigen Zeitintervalls (t1, t2) vorgegeben wird.

2. Verfahren nach Anspruch 1, **dadurch gekennzeichnet, dass** das Zeitintervall (t1, t2) umso größer ist, je geringer die Geschwindigkeit zum Zeitpunkt des Zielobjektverlusts (t1) ist.

3. Verfahren nach einem der vorangegangenen Ansprüche, **dadurch gekennzeichnet, dass** der Übergangs-Beschleunigungssollwert (a_Ü) in Abhängigkeit von der Zeit nach dem Zielobjektverlust und der Differenz aus dem Freifahrt-Beschleunigungswert (a_ZO-) und einem Startbeschleunigungswert (a_St) vorgegeben wird.

4. Verfahren nach einem der vorangegangenen Ansprüche, **dadurch gekennzeichnet, dass** der Übergangs-Beschleunigungswert (a_Ü) in Abhängigkeit von der Zeit nach dem Zielobjektverlust derart ermittelt wird, dass sich der Übergangs-Beschleunigungswert (a-Ü) innerhalb des geschwindigkeitsabhängigen Zeitintervalls (t1, t2) gemäß einer Rampe (r) von einem Start-Beschleunigungswert (a_St) kontinuierlich bis zum Freifahrt-Beschleunigungswert (a_ZO-) verändert.

5. Verfahren nach einem der Ansprüche 1 - 3, **dadurch gekennzeichnet, dass** der Übergangs-Beschleunigungswert (a_Ü) in Abhängigkeit von der Zeit nach dem Zielobjektverlust derart ermittelt wird, dass der Übergangs-Beschleunigungswert (a_Ü) für eine vorgegeben Zeit einem Start-Beschleunigungswert (a_St) entspricht und der Übergangs-Beschleunigungswert sich anschließend bis zum Ende geschwindigkeitsabhängigen Zeitintervalls (t2) gemäß einer Rampe vom Start-Beschleunigungswert (a_St) kontinuierlich bis zum Freifahrt-Beschleunigungswert (a_ZO-) verändert.

6. Verfahren nach Anspruch 4 oder 5, **dadurch gekennzeichnet, dass** der Start-Beschleunigungswert (a_St) der Folgefahrt-Beschleunigungswert (a_ZO+) oder ein zwischen dem Folgefahrt-Beschleunigungswert (a_ZO+) und dem Freifahrt-Beschleunigungswert (a_ZO-) liegender Zwischen-Beschleunigungswert ist.

7. Verfahren nach einem der vorangegangenen Ansprüche, **dadurch gekennzeichnet, dass** eine Zielobjektverlust-Wahrscheinlichkeit (WK) in Abhängigkeit von der Zeit nach dem Zielobjektverlust und der aktuellen Geschwindigkeit zum Zeitpunkt des Zielobjektverlustes (t1) ermittelt wird, die vorteilhafterweise mit größer werdendem Zeitabstand zwischen dem Zeitpunkt des Zielobjektverlustes (t1) und der aktuellen Zeit nach dem Zielobjektverlust größer wird.

8. Verfahren nach Anspruch 7, **dadurch gekennzeichnet, dass** der Übergangs-Beschleunigungssollwert (a_Ü) in Abhängigkeit von der Zielobjektverlust-Wahrscheinlichkeit (WK) gebildet wird.

9. Verfahren nach Anspruch 7 oder 8, **dadurch gekennzeichnet, dass** der Übergangs-Beschleunigungssollwert (a_Ü) ermittelt wird durch Addition des Start-Beschleunigungswertes (a_St) mit einem Wert, der durch Multiplikation der Zielobjektverlust-Wahrscheinlichkeit (WK) mit der Differenz aus einem Startbeschleunigungswert (a_St) und dem Freifahrt-Beschleunigungswert a_ZO-) gebildet wird.

**Claims**

1. A method for speed and/or distance control in motor vehicles with distance-related longitudinal control systems, wherein during a clear drive (ZO-) a clear drive acceleration value (a_ZO-) is predetermined to reach a predetermined speed, and during a following drive (ZO+) in relation to a detected target object, a following drive acceleration value (a_ZO+) is predetermined to maintain a predetermined spacing from the target object, and wherein upon a loss of the target object during a following drive (ZO-) a transition acceleration value (a_Ü) is predetermined, **characterised in that** the transition acceleration value (a_Ü) is predetermined for the duration of a speed-dependent time interval (t1, t2) at the time of the target object loss (t1).

2. A method according to claim 1, **characterised in that** the time interval (t1, t2) is all the greater, the lower the speed at the time of the target object loss (t1).

3. A method according to any one of the preceding claims, **characterised in that** the desired transition acceleration value (a_Ü) is determined as a function of the time after the target object loss and the difference between the clear drive acceleration value (a_ZO-) and a starting acceleration value (a_St).

4. A method according to any one of the preceding claims, **characterised in that** the transition acceleration value (a_Ü) is determined as a function of the time after the target object loss in such a way that the transition acceleration value (a_Ü) changes continuously within the speed-dependent time interval (t1, t2) according to a ramp (r) from a start acceleration value (a_St) up to a clear drive acceleration value (a_ZO-).

5. A method according to any one of claims 1 to 3, **characterised in that** the transition acceleration value (a_Ü) is determined as a function of the time after the target object loss in such a way that the transition acceleration value (a_Ü) corresponds for a predetermined time to a start acceleration value (a_St) and the transition acceleration value then continuously changes to the end of the speed-dependent time interval (t2) in accordance with a ramp from the starting acceleration value (a_St) up to the clear drive acceleration value (a_ZO-).

6. A method according to claim 4 or 5, **characterised in that** the start acceleration value (a_St) is the following drive acceleration value (a_ZO+) or an intermediate acceleration value lying between the following drive acceleration value (a_ZO+) and the clear drive acceleration value (a_ZO-).

7. A method according to any one of the preceding claims, **characterised in that** a target object loss probability (WK) is determined as a function of the time after the target object loss and the current speed at the time of the target object loss (t1), and advantageously becomes greater as the time interval becomes greater between the time of the target object loss (t1) and the current time after the target object loss.

8. A method according to claim 7, **characterised in that** the desired transition acceleration value (a_Ü) is formed as a function of the target object loss probability (WK).

9. A method according to claim 7 or 8, **characterised in that** the desired transition acceleration value (a_Ü) is determined by adding the start acceleration value (a_St) and a value, which is formed by multiplying the target object loss probability (WK) by the difference between a starting acceleration value (a_St) and the clear drive acceleration value (a_ZO-).

**Revendications**

1. Procédé de régulation de vitesse et/ou de distance entre des véhicules automobiles équipés de systèmes de régulation de longueur fondée sur une distance, selon lequel

   - en cas de circulation libre (ZO-), on prédéfinit une valeur d'accélération de circulation libre (a_ZO-) pour atteindre une vitesse prédéfinie et en cas de conduite en file (ZO+) par rapport à un objet cible détecté, on prédéfinit une valeur d'accélération de conduite en file (a_ZO+) pour respecter une distance prédéfinie par rapport à l'objet cible, et
   - en cas de disparition de l'objet cible pendant une conduite en file (ZO-), on prédéfinit une valeur d'accélération transitoire (a_ Ü), procédé **caractérisé en ce qu'**

on prédéfinit la valeur d'accélération transitoire (a_ Ü) pour la durée d'un intervalle de temps (t1, t2) dépendant de la vitesse par rapport à l'instant de la disparition de l'objet cible (t1).

2. Procédé selon la revendication 1, **caractérisé en ce que** l'intervalle de temps (t1, t2) est d'autant plus grand que la vitesse à l'instant de la disparition de l'objet cible (t1) était faible.

3. Procédé selon l'une des revendications précédentes, **caractérisé en ce qu'** on prédéfinit la valeur de consigne de l'accélération transitoire (a_Ü) en fonction du temps après la disparition de l'objet cible et de la différence entre la valeur d'accélération de conduite libre (a_ZO-) et une valeur d'accélération de départ (a_St).

4. Procédé selon l'une des revendications précédentes, **caractérisé en ce qu'** on détermine la valeur d'accélération transitoire (a_ Ü) en fonction du temps écoulé après la perte de l'objet cible de façon que la valeur d'accélération transitoire (a_Ü) varie dans l'intervalle de temps en fonction de la vitesse (t1, t2) selon une rampe (r) à partir de la valeur d'accélération de départ (a_St) en continu jusqu'à la valeur d'accélération de conduite libre (a_ZO-).

5. Procédé selon l'une des revendications 1 à 3, **caractérisé en ce qu'** on détermine la valeur d'accélération transitoire (a_ Ü) en fonction du temps après la disparition de l'objet cible, la valeur d'accélération transitoire (a_Ü) correspond pour une durée prédéfinie, à une valeur d'accélération de départ (a_St), et ensuite la valeur d'accélération transitoire varie jusqu'à la fin de l'intervalle de temps (t2) en fonction de la vitesse selon une rampe en partant de la valeur d'accélération de départ (a_ St) en continu jusqu'à la valeur d'accélération de conduite libre (a_ZO-).

6. Procédé selon la revendication 4 ou 5,

**caractérisé en ce que**
la valeur d'accélération de départ (a_St) est la valeur d'accélération de conduite en file (a_ZO+) ou une valeur d'accélération, intermédiaire entre la valeur d'accélération de conduite en file (a_ZO+) et la valeur d'accélération en conduite libre (a_ZO-).

7. Procédé selon l'une des revendications précédentes,
   **caractérisé en ce qu'**
   on détermine une probabilité de disparition d'objet cible (WK) en fonction du temps écoulé après la disparition de l'objet cible et la vitesse actuelle à l'instant (t1) de la disparition de l'objet cible, et qui avantageusement augmente avec l'intervalle de temps entre l'instant de la disparition de l'objet cible (t1) et le temps actuel après la perte de l'objet cible.

8. Procédé selon la revendication 7,
   **caractérisé en ce qu'**
   on forme la valeur de consigne de l'accélération transitoire (a_Ü) en fonction de la probabilité de la disparition de l'objet cible (WK).

9. Procédé selon la revendication 7 ou 8,
   **caractérisé en ce qu'**
   on détermine la valeur de consigne de l'accélération transitoire (a_Ü) en ajoutant la valeur d'accélération de départ (a_St) à une valeur formée par la multiplication de la probabilité de la disparition de l'objet cible (WK) et de la différence entre la valeur d'accélération de départ (a_St) et la valeur d'accélération de conduite libre (a_ZO-).

Fig. 1

Fig..2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10047746 A1
- DE 10006403 A1